# EUROPÄISCHE PATENTSCHRIFT

(11) **EP 4 524 030 B1**
(45) Veröffentlichungstag und Bekanntmachung des Hinweises auf die Patenterteilung: **09.09.2026**
(21) Anmeldenummer: 23198095.4
(22) Anmeldetag: 18.09.2023
(51) Int. Cl.: B64B 1/06, B64B 1/22, B64D 5/00, B64U 10/30, B64U 70/20, B64U 80/82, B64B 1/08, B64B 1/30

(54) **LUFTSCHIFF-SYSTEM, ALS KOMPONENTEN DES LUFTSCHIFF-SYSTEMS VERWENDBARE LUFTSCHIFFE, VERFAHREN ZUM TRANSPORTIEREN EINER NUTZLAST, UND VERWENDUNG DES LUFTSCHIFF-SYSTEMS**
AIRSHIP SYSTEM, AIRSHIPS USABLE AS COMPONENTS OF THE AIRSHIP SYSTEM, METHOD FOR TRANSPORTING A PAYLOAD, AND USE OF THE AIRSHIP SYSTEM
SYSTÈME DE DIRIGEABLE, DIRIGEABLES UTILISABLES COMME COMPOSANTS DU SYSTÈME DE DIRIGEABLE, PROCÉDÉ DE TRANSPORT D'UNE CHARGE UTILE ET UTILISATION DU SYSTÈME DE DIRIGEABLE

(43) Veröffentlichungstag der Anmeldung: 19.03.2025
(73) Patentinhaber: HR magnetics engineering, 12487 Berlin (DE)
(72) Erfinder: Dr. Richert, Hendryk, 12487 Berlin (DE)
(74) Vertreter: Jannig & Repkow Patentanwälte PartG mbB

(56) Entgegenhaltungen:
- WO-A1-2021/173848
- WO-A1-2022/046064
- WO-A1-2023/010224
- US-A1- 2023 339 629

## Beschreibung

Die vorliegende Erfindung betrifft ein Luftschiff-System gemäß dem Oberbegriff des Patentanspruchs 1, und ein Verfahren zum Transportieren einer Nutzlast gemäß dem Oberbegriff des Patentanspruchs 11.

Insbesondere geht es vorliegend darum, Wasserstoff oder sonstige Energieträger von einem Startort zu einem Zielort zu transportieren. Klimaneutral herstellbare und nutzbare Energieträger wie beispielsweise Wasserstoff werden in Zukunft zunehmend an Bedeutung gewinnen. Die klimaneutrale Herstellung solcher Energieträger erfolgt vorzugsweise unter Verwendung erneuerbarer Energien, insbesondere unter Verwendung von Solarenergie. Der Wasserstoff wird daher vornehmlich in Regionen erzeugt werden, die über viel Sonneneinstrahlung verfügen. Der Transport des Wasserstoffs vom Erzeugungsort zum Verbrauchsort oder einer verbrauchsortnahen Verteilstation kann beispielsweise über Pipelines erfolgen. Da derzeit zwischen den potentiellen Wasserstofferzeugungsorten und den potentiellen Wasserstoffverbauchsorten noch keine Pipelinenetze für den Transport von Wasserstoff zur Verfügung stehen, müssten diese erst gebaut werden, was mit einem immensen Aufwand verbunden wäre. Der Wasserstoff könnte (ähnlich wie LNG) auch durch geeignete Schiffe / Tanker transportiert werden. Der Bau geeigneter Terminals sowie die Anlieferung des Wasserstoffs vom Erzeugungsort zum Start-Terminal und der Weitertransport des Wasserstoffs vom Ziel-Terminal zum Verbrauchsort sind jedoch ebenfalls mit einem immensen Aufwand verbunden. Weiterer Stand der Technik ist in den Dokumenten WO 2023/010224 A1, US 2023/339629 A1, WO 2022/046064 A1 und WO 2021/173848 A1 offenbart.

Der vorliegenden Erfindung liegt daher die Aufgabe zugrunde, eine Möglichkeit zu finden, die einen besonders einfach realisierbaren und effizienten Transport von Wasserstoff und/oder anderen Energieträgern ermöglicht.

Diese Aufgabe wird erfindungsgemäß durch das in Patentanspruch 1 beanspruchte Luftschiff-System und das in Patentanspruch 11 beanspruchte Verfahren gelöst.

Das erfindungsgemäße Luftschiff-System gemäß Patentanspruch 1 zeichnet sich dadurch aus, dass es ein erstes Luftschiff und mindestens ein zweites Luftschiff umfasst, wobei das mindestens eine zweite Luftschiff zur Aufnahme einer durch das Luftschiff-System zu transportierenden Nutzlast ausgelegt ist, und wobei das erste Luftschiff dazu ausgelegt ist, mehrere zweite Luftschiffe vollständig in sich aufzunehmen, und zusammen mit diesen von einem Startort zu einem Zielort zu fliegen, und wobei das mindestens eine zweite Luftschiff ein Traggas enthält, wobei das Traggas leichter ist als Luft und eine auf das zweite Luftschiff wirkende Auftriebskraft erzeugt, und wobei Art, Menge, und Eigenschaften des Traggases derart sind, dass das zweite Luftschiff während des Transports durch das erste Luftschiff statisch ausgewogen schwebt.

Das heißt, mehrere der die Nutzlast enthaltenden kleineren zweiten Luftschiffe werden innerhalb des größeren ersten Luftschiffs untergebracht, und können dann mit besonders geringem Aufwand vom ersten Luftschiff vom Startort zum Zielort geflogen werden.

Das in Patentanspruch 6 näher definierte erste Luftschiff zeichnet sich dadurch aus, dass es einen Laderaum aufweist, der zur vollständigen Aufnahme der die Nutzlast geladen habenden weiteren zweiten Luftschiffe in sich ausgelegt ist.

Das in Patentanspruch 9 näher definierte zweite Luftschiff zeichnet sich dadurch aus, dass es in seinem Inneren einen Nutzlastabschnitt zur Aufnahme einer Nutzlast in sich und eine oder mehrere Auftriebsstrukturen zur Aufnahme eines Traggases enthält, wobei das Traggas leichter ist als Luft und eine auf das Luftschiff wirkende Auftriebskraft erzeugt, und wobei das Luftschiff dazu ausgelegt ist, einen Teil der Strecke vom Startort zum Zielort im Laderaum eines anderen Luftschiffes zurückzulegen.

Da - wie es bei Luftschiffen üblich ist - sowohl das erste Luftschiff als auch die zweiten Luftschiffe ein Traggas enthalten, das leichter ist als Luft, wird eine die Luftschiffe zum Schweben bringende Auftriebskraft erzeugt.

Dies wird bei dem erfindungsgemäßen Verfahren gemäß Patentanspruch 11 dahingehend ausgenutzt, dass sich das erste Luftschiff während des Beladens und Entladens desselben nicht am Boden befinden, also nicht landen muss. Die die Nutzlast enthaltenden zweiten Luftschiffe können bei in der Luft schwebendem ersten Luftschiff in dieses hinein und aus diesem hinaus gelangen und selbständig von einem am Boden befindlichen Terminal zum ersten Luftschiff bzw. vom ersten Luftschiff zu einem am Boden befindlichen Terminal fliegen, oder beispielsweise unter Verwendung einer Drohne oder eines sonstigen externen Transportmittels zwischen dem ersten Luftschiff und dem Terminal bewegt werden.

Die in Patentanspruch 14 beanspruchte Verwendung des erwähnten Luftschiff-Systems zeichnet sich dadurch aus, dass die durch das Luftschiff-System zu transportierende Nutzlast durch einen Energieträger gebildet wird, insbesondere durch einen Energieträger, aus dem auch zumindest Teile des zum Betrieb des Luftschiff-Systems erforderlichen Traggases und/oder Teile der zum Betrieb des Luftschiff-Systems erforderlichen Energie gewinnbar sind.

Vorteilhafte Weiterbildungen der Erfindung sind den weiteren Unteransprüchen, der folgenden Beschreibung und den Figuren entnehmbar.

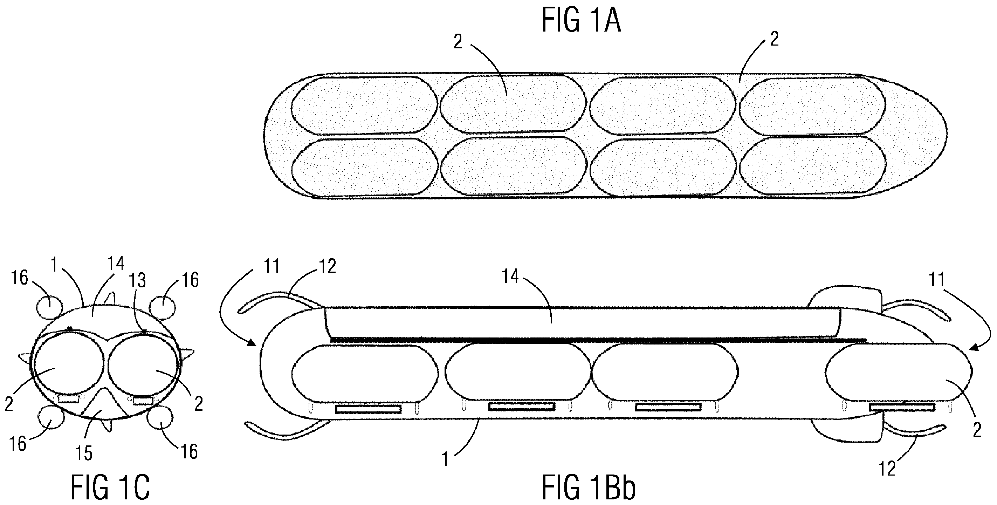

Die Erfindung wird nachfolgend anhand von Ausführungsbeispielen unter Bezugnahme auf die Figuren näher erläutert. Es zeigen
- Figur 1A: ein erstes Ausführungsbeispiel eines im Folgenden näher beschriebenen Luftschiff-Systems (horizontaler Längsschnitt, von oben gesehen),
- Figur 1A: eine andere Ansicht des in der Figur 1A gezeigten Luftschiff-Systems (vertikaler Längsschnitt, von der Seite gesehen),
- Figur 1C: eine andere Ansicht des in den Figuren 1A und 1B gezeigten Luftschiff-Systems (Querschnitt, von vorn gesehen),
- Figur 2A: ein zweites Ausführungsbeispiel eines im Folgenden näher beschriebenen Luftschiff-Systems (horizontaler Längsschnitt, von oben gesehen),

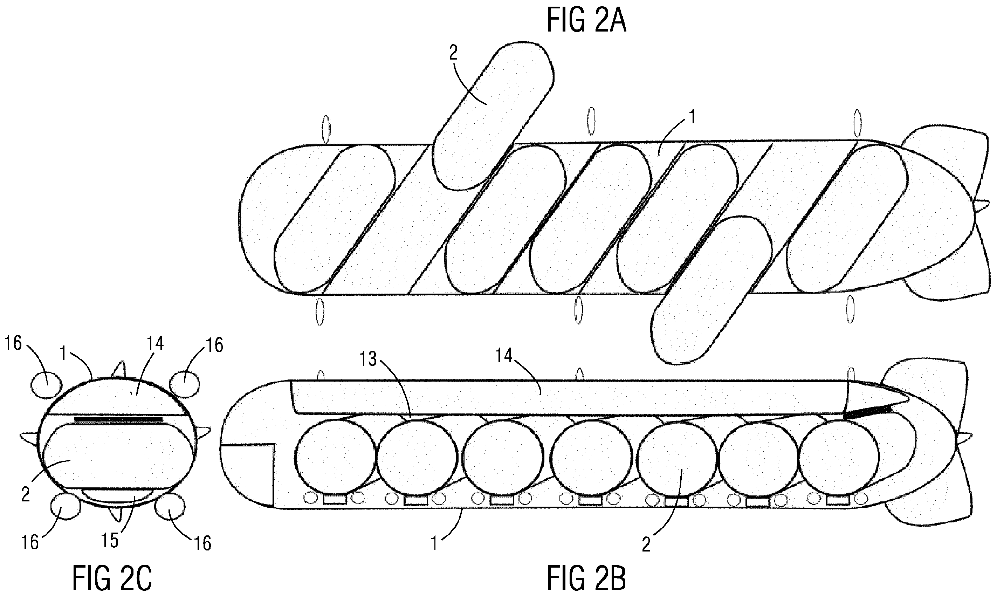

- Figur 2A: eine andere Ansicht des in der Figur 2A gezeigten Luftschiff-Systems (vertikaler Längsschnitt, von der Seite gesehen),
- Figur 2C: eine andere Ansicht des in den Figuren 2A und 2B gezeigten Luftschiff-Systems (Querschnitt, von vorn gesehen)

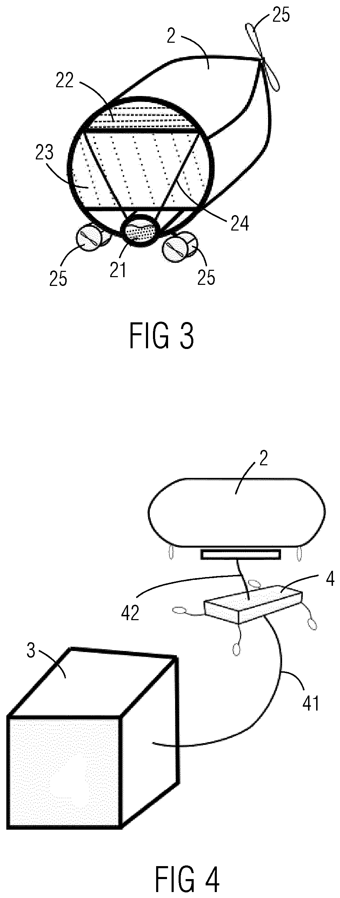

- Figur 3: eine zweites Luftschiff des im Folgenden näher beschriebenen Luftschiff-Systems (Querschnitt, von vorn gesehen), und
- Figur 4: eine Darstellung zur Erläuterung des Transports eines zweiten Luftschiffs von einem am Boden befindlichen Terminal zu einem in der Luft schwebenden ersten Luftschiff mittels einer Drohne.

Zur Vermeidung von Missverständnissen sei darauf hingewiesen, dass die Figuren nur schematische und nicht maßstabsgetreue Darstellungen sind.

Das im Folgenden beschriebene Luftschiff-System ist ein Luftschiff-System zum Transportieren einer Nutzlast von einem Startort zu einem Zielort.

Luftschiffe sind seit dem 19. Jahrhundert bekannte Luftfahrzeuge, deren Auftrieb auf aerostatischen Kräften beruht. Genauer gesagt enthalten die Luftschiffe ein Traggas, das leichter ist als Luft und eine auf das Luftschiff wirkende Auftriebskraft erzeugt. Ein bekannter Vertreter dieser Art von Luftfahrzeug ist der Zeppelin. Wie sich aus der folgenden Beschreibung ergibt, weist das hier vorgestellte Luftschiff-System jedoch erhebliche Unterschiede zu einem Zeppelin und anderen herkömmlichen Luftschiffen auf.

Es sei bereits an dieser Stelle darauf hingewiesen, dass keine zwingende Notwendigkeit besteht, die Höhensteuerung der zum Luftschiff-Systems gehörenden Luftschiffe ausschließlich unter Ausnutzung des durch das Traggas erzeugten statischen Auftriebs vorzunehmen. Neben diesem statischen Auftrieb kann bei Bedarf ein Antrieb der Luftschiffe benutzt werden, um zusätzlich einen dynamischen Auftrieb zu erzeugen. Durch die Geschwindigkeit und das Anstellen des Luftschiffkörpers gegenüber der Horizontalen entsteht ähnlich wie bei einem Flugzeug mit seinen Tragflächen eine Auftriebskraft. Dieser Effekt wird beispielsweise genutzt, wenn das Luftschiff steigen oder sinken soll, oder wenn sich das Gewicht des Luftschiffes während der Fahrt durch Regenwasser, das auf die Hülle fällt, erhöht. Die Höhensteuerung kann auch durch schwenkbare Luftschrauben am Luftschiff unterstützt werden. Durch eine entsprechende Ausrichtung und einen entsprechenden Betrieb der Luftschrauben kann das Luftschiff ebenfalls auch dann zum Steigen gebracht werden, wenn es etwas schwerer ist als Luft, und ebenfalls auch dann zum Sinken gebracht werden, wenn es leichter ist als Luft.

Die durch das Luftschiff-System zu transportierende Nutzlast ist in den vorliegend betrachteten Beispielen Wasserstoff, wobei der Wasserstoff sowohl in gasförmiger als auch in flüssiger Form vorliegen kann. Das Luftschiff-System kann aber auch für den Transport anderer Energieträger verwendet werden, wie beispielsweise, aber nicht ausschließlich Methan, Methanol, sonstige Kohlenwasserstoffe, NH3 oder sonstige E-fuels, Erdgas, oder auch feste Energieträger wie Holz, oder getrocknete Algen, und alle sonstigen mit Luftschiffen transportierbare Energieträger. Prinzipiell können durch das Luftschiff-System auch beliebige anderen Nutzlasten transportiert werden.

Ein erstes Ausführungsbeispiel des hier vorgestellten Luftschiff-Systems ist in den Figuren 1A bis 1C gezeigt. Das Luftschiffsystem umfasst ein erstes Luftschiff 1 und mehrere zweite Luftschiffe 2, wobei die zweiten Luftschiffe zur Aufnahme einer durch das Luftschiff-System zu transportierenden Nutzlast ausgelegt sind, und wobei das erste Luftschiff dazu ausgelegt ist, die mehreren Luftschiffe vollständig in sich aufzunehmen, und zusammen mit diesen von einem Startort zu einem Zielort zu fliegen.

Das erste Luftschiff 1 weist in seinem Inneren einen Laderaum für die vollständige Aufnahme der zweiten Luftschiffe auf. Der Laderaum ist in den Figuren 1A bis 1C derjenige Bereich des ersten Luftschiffs, in welchem sich die zweiten Luftschiffe befinden.

In dem in den Figuren 1A bis 1C gezeigten Beispiel umfasst das Luftschiff-System 1 acht zweite Luftschiffe 2, kann also bis zu 8 zweite Luftschiffe in sich aufnehmen. Es können aber auch mehr oder weniger, allerdings nicht weniger als zwei (mindestens zwei) zweite Luftschiffe vorgesehen werden.

Es besteht auch keine Notwendigkeit, dass das erste Luftschiff immer mit der maximalen Anzahl an zweiten Luftschiffen beladen ist. Die Anzahl der im ersten Luftschiff tatsächlich geladenen zweiten Luftschiffe kann beliebig viel kleiner sein als die maximale Anzahl. Das erste Luftschiff kann auch ohne geladenes zweites Luftschiff fliegen.

Bei dem in den Figuren 1A bis 1C gezeigten Ausführungsbeispiel sind die zweiten Luftschiffe 2 hintereinander in zwei parallel nebeneinander liegenden, in Längsrichtung des ersten Luftschiffs verlaufenden Reihen angeordnet.

Das erste Luftschiff 1 ist im betrachteten Beispiel ein langgestrecktes Gebilde mit aerodynamisch vorteilhaft ausgebildeten Endabschnitten und einem ovalen Querschnitt. Auf den ovalen Querschnitt besteht jedoch keine Einschränkung. Prinzipiell könnte des erste Luftschiff auch einen anderen Querschnitt aufweisen.

Wie insbesondere aus der Figur 1B ersichtlich ist, weist das erste Luftschiff 1 an seinem vorderen Ende und an seinem hinteren Ende verschließbare Öffnungen 11 auf, über welche die zweiten Luftschiffe 2 in das erste Luftschiff 1 hineingelangen und aus dem ersten Luftschiff hinaus gelangen können. Diese Öffnungen 11 sind während des Be- oder Entladens des ersten Luftschiffs geöffnet, und sonst geschlossen.

Über welche der Öffnungen 11 ein jeweiliges zweites Luftschiff in das erste Luftschiff hineingelangt und hinaus gelangt, ist prinzipiell frei wählbar. Es kann aber beispielsweise auch vorgesehen werden, dass die zweiten Luftschiffe frontseitig eingeschleust und rückseitig ausgeschleust werden, oder dass die eine Nutzlast enthaltenden zweiten Luftschiffe frontseitig eingeschleust, und die keine Nutzlast mehr enthaltenden zweiten Luftschiffe rückseitig eingeschleust werden.

Im betrachteten Beispiel sind zum Öffnen und Schließen der Öffnungen 11 jeweils zwei schwenkbare Klappen 12 vorgesehen. Die Figur 1B zeigt den Zustand, in welchem die Klappen 12 in ihre jeweilige Öffnungsstellung geschwenkt sind und die Öffnungen 11 zum Be- und Entladen des ersten Luftschiffs geöffnet sind. Die Öffnungen 11 können jedoch auch auf beliebige andere Art und Weise, beispielsweise, aber nicht ausschließlich durch andere Klappen, oder durch Roll- oder Schiebetore, oder durch Lamellen, oder durch mit Traggas füllbare Strukturen, geöffnet und geschlossen werden.

Die Figur 1B zeigt ferner, wie gerade ein zweites Luftschiff 2 durch die in der Figur 1 rechts dargestellte Öffnung hindurch in das erste Luftschiff 1 hinein oder aus diesem heraus gelangt.

Vorzugsweise enthält das erste Luftschiff ein in den Figuren nicht gezeigte Führungsmittel, entlang welcher die zweiten Luftschiffe 2 innerhalb des ersten Luftschiffs 1 bewegbar sind. Diese Führungsmittel können beispielsweise, aber nicht ausschließlich durch Schienen gebildet werden.

Vorzugsweise enthält das erste Luftschiff 1 ferner ein in den Figuren nur schematisch dargestelltes Positionier- und Fixiersystem 13, durch welches die zweiten Luftschiffe 2 an ihrer bestimmungsgemäßen Position innerhalb des ersten Luftschiffs so fixiert werden können, dass sie sich nicht mehr relativ zum ersten Luftschiff bewegen können. Diese Positionier- und Fixiersystem ist ein lösbares Positionier- und Fixiersystem, das bei Bedarf, beispielsweise während des Einladens oder Ausladens eines jeweiligen zweiten Luftschiffs 2 gelöst werden kann, um eine Bewegung des zweiten Luftschiffs innerhalb des ersten Luftschiffs zu ermöglichen.

Ferner enthält das erste Luftschiff 1 eine oder mehrere Auftriebsstrukturen 14, 15, in welchen sich das den statischen Auftrieb für das erste Luftschiff erzeugende Traggas des ersten Luftschiffs befindet. Wie später noch näher erläutert werden wird, muss das in den Auftriebsstrukturen 14, 15 enthaltene Traggas nur so viel Auftriebskraft erzeugen wie es für einen ordnungsgemäßen Betrieb des ersten Luftschiff allein erforderlich ist. Die zweiten Luftschiffe 2 haben eigene Auftriebsstrukturen, die eine auf die zweiten Luftschiffe wirkende Auftriebskraft erzeugen, sodass ein mit zweiten Luftschiffen beladenes erstes Luftschiff nicht oder allenfalls unwesentlich mehr wiegt als ein unbeladenes erstes Luftschiff.

Im betrachteten Beispiel umfassen die Auftriebsstrukturen 14, 15 des ersten Luftschiffs 1 eine im oberen Luftschiffbereich vorgesehene obere Auftriebsstruktur 14 und/oder eine im unteren Luftschiffbereich vorgesehene untere Auftriebsstruktur 15. Es sei jedoch darauf hingewiesen, dass keine Einschränkung auf die Anzahl und die Position der vorhandenen Auftriebsstrukturen besteht. Grundsätzlich können beliebig viele, und auch anderswo angeordnete Auftriebsstrukturen vorgesehen sein.

Das im ersten Luftschiff enthaltene Traggas ist leichter als Luft und erzeugt eine auf das erste Luftschiff wirkende Auftriebskraft, welche vorzugsweise so groß ist, dass sie das erste Luftschiff zum Schweben bringt. Genauer gesagt ist es vorzugsweise so, dass das erste Luftschiff während des Fluges zum Startort zum Zielort statisch ausgewogen schwebt.

Und vorzugsweise ist es ferner so, dass das Traggas zumindest teilweise durch einen Teil eines die Nutzlast bildenden Gases, oder durch ein aus der Nutzlast oder den zweiten Luftschiffen entweichendes Gas, oder durch ein aus der Nutzlast gewonnenes Gas gebildet wird.

Außerdem enthält das erste Luftschiff 1 eine oder mehrere Antriebsvorrichtungen 16 für den Vortrieb des ersten Luftschiffs. Im betrachteten Beispiel sind vier Antriebsvorrichtungen 16 vorgesehen, die gleichmäßig und symmetrisch verteilt außen am Rumpf des ersten Luftschiffs angebracht sind. Es können aber auch mehr oder weniger und/oder anderswo angeordnete Antriebsvorrichtungen 16 vorgesehen werden.

Vorzugsweise ist die mindestens eine Antriebsvorrichtung 16 des ersten Luftschiffs dazu auslegt, die von ihm benötigte Energie zumindest teilweise aus dem Traggas und/oder der in den zweiten Luftschiffen enthaltenen Nutzlast zu gewinnen.

Der prinzipielle Aufbau eines der zweiten Luftschiffe 2 ist in Figur 3 veranschaulicht.

Das zweite Luftschiff 2 enthält unter anderem einen Nutzlastabschnitt 21 zur Unterbringung der zu transportierenden Nutzlast. Wie der Nutzlastabschnitt ausgebildet ist, hängt von der zu transportierenden Nutzlast ab. Im betrachteten Beispiel handelt es sich um mindestens einen Behälter, in welchen gasförmige oder flüssige Nutzlasten einfüllbar sind. Dieser Behälter ist beispielsweise ein Drucktank oder ein Kryobehälter. Es konnte sich aber auch um einen Behälter oder einen Laderaum handeln, in welchem beliebige andere Arten von Nutzlasten, beispielsweise, aber selbstverständlich nicht ausschließlich, feste Stoffe oder Stoffmischungen, auf Paletten abgestellte Waren oder Stückgut unterbringbar ist.

Das zweite Luftschiff verfügt ferner über eine oder mehrere Auftriebsstrukturen 22 in welchen sich das den statischen Auftrieb für das zweite Luftschiff erzeugende Traggas des zweiten Luftschiffs befindet. Im betrachteten Beispiel wird diese Auftriebsstruktur durch eine einzige, im oberen Luftschiffbereich vorgesehene Auftriebsstruktur 22 gebildet. Es sei jedoch darauf hingewiesen, dass keine Einschränkung auf die Anzahl und die Position der vorhandenen Auftriebsstrukturen besteht. Grundsätzlich können beliebig viele, und auch anderswo angeordnete Auftriebsstrukturen vorgesehen sein.

Das im zweiten Luftschiff enthaltene Traggas ist leichter als Luft und erzeugt eine auf das zweite Luftschiff wirkende Auftriebskraft, welche vorzugsweise so groß ist, dass sie das zweite Luftschiff zum Schweben bringt. Genauer gesagt sind Art, Menge, und sonstige Eigenschaften des Traggases vorzugsweise derart, dass das zweite Luftschiff während des Transports durch das erste Luftschiff statisch ausgewogen schwebt.

Ferner umfasst das zweite Luftschiff einen Nutzgasabschnitt 23, in welchem sich ein Nutzgas, das vorzugsweise leichter ist als Luft, befinden kann. Das Nutzgas kann von außerhalb des zweiten Luftschiffs in den Nutzgasabschnitt eingefüllt oder aus diesem entnommen werden, oder aber zumindest teilweise auch aus der Nutzlast entweichen oder gewonnen werden. Insbesondere kann beispielsweise das infolge von Diffusions- und/oder Abdampfverlusten aus der Nutzlast entweichende Gas als Nutzgas verwendet werden. Wenn wie im betrachteten Beispiel die Nutzlast durch Wasserstoff gebildet wird, kann aus in flüssiger Form vorliegendem Wasserstoff infolge von Diffusions- und/oder Abdampfverlusten aus der gasförmiger Wasserstoff entweichen und als Nutzgas verwendet werden. Das Nutzgas dient in diesem Fall einerseits zur Erzeugung eines zusätzlichen Auftriebes zur Kompensation des Nutzlastgewichts, und ist andererseits als Energiequelle für den Betrieb des zweiten und/oder des ersten Luftschiffs verwendbar. Da das Nutzgas im betrachteten Beispiel wie das Traggas eine auf das zweite Luftschiff wirkende Auftriebskraft erzeugt, kann es im Ergebnis auch dem Traggas zugerechnet werden. Da das Nutzgas und das Traggas in unterschiedlichen Luftschiffabschnitten untergebracht sind, kann es sich um verschiedene Gase handeln. Beispielsweise könnte das Traggas durch Helium gebildet werden, und das Nutzgas durch Wasserstoff. Und wenn nach der Entnahme der Nutzlast aus dem zweiten Luftschiff weniger Auftrieb für das zweite Luftschiff erforderlich ist, kann auch zumindest ein Teil des als Traggas wirkenden Nutzgases aus dem zweiten Luftschiff abgepumpt werden und als Teil der transportierten Nutzlast verwendet werden.

Ferner kann das zweite Luftschiff 2 bei Bedarf eine zur mechanischen Stabilisierung desselben dienende Tragstruktur 24 enthalten.

Das in der Figur 3 gezeigte zweite Luftschiff enthält ferner mindestens eine Antriebsvorrichtung 25 für den eigenständigen Vortrieb des zweiten Luftschiffs. Im betrachteten Beispiel sind drei Antriebsvorrichtungen 25 vorgesehen, nämlich zwei Antriebsvorrichtungen außen am Rumpf des zweiten Luftschiffs, und eine Antriebsvorrichtung am hinteren Ende des zweiten Luftschiffs. Es können aber auch mehr oder weniger und/oder anderswo angeordnete Antriebsvorrichtungen 25 vorgesehen werden.

Das zweite Luftschiff 2 kann auch ein passives, das heißt antriebsloses Luftschiff sein. Ein solches zweites Luftschiff würde dann ähnlich wie ein gasgefüllter Ballon passiv mit der Luft schweben. Ein solches zweites Luftschiff kann beispielsweise unter Verwendung einer Drohne oder einer sonstigen externen Transportvorrichtung wunschgemäß bewegt werden.

Ein Beispiel hierfür ist in Figur 4 dargestellt. Die Figur 4 zeigt eine Anordnung, in welcher ein passives zweites Luftschiff 2 mit Hilfe einer Drohne 4 zwischen einer Bodenstation 3 und dem (in der Figur 4 nicht gezeigten) ersten Luftschiff hin- und herbewegbar ist. Die Drohne 4 ist im gezeigten Beispiel über ein Seil 41 mit der Bodenstation 3 verbunden. Um das zweite Luftschiff 2 zur Bodenstation 3 herunterzuholen, fliegt die Drohne 4 zum zweiten Luftschiff hoch und stellt über ein Seil 42 eine Verbindung mit dem zweiten Luftschiff 2 her. Anschließend kann das zweite Luftschiff über die Seile 41 und 42 nach unten zur Bodenstation gezogen werden.

Der Einsatz der Drohnen 4 ist aber nicht auf dieses Beispiel beschränkt.

Unter anderem müssen die Drohnen 4 nicht unbedingt wie in der in der Figur 4 gezeigten Anordnung vom Boden aus agieren. Sie können auch vom ersten Luftschiff aus agieren und wären dann über das Seil nicht mit der Bodenstation 3, sondern mit dem ersten Luftschiff verbunden. In beiden Fällen transportieren die Drohnen zum Manövrieren des zweiten Luftschiffs ausgelegte Seile zum zweiten Luftschiff und verankern diese daran, beispielweise durch Haken, oder durch Elektromagnete, oder auf beliebige sonstige Art und Weise. An den Seilen können die Drohnen dann zu ihrem jeweiligen Bestimmungsort gezogen werden.

Damit ist es möglich, im ersten Luftschiff befindliche zweite Luftschiffe unter Verwendung einer vom Boden aus agierenden Drohne 4 mittels eines Seils nach unten zur Bodenstation zu ziehen (siehe Figur 4), und am Boden befindliche zweite Luftschiffe unter Verwendung einer vom ersten Luftschiff aus agierenden Drohne 4 mittels eines Seils nach oben zum ersten Luftschiff zu ziehen.

Zusätzlich oder alternativ kann auch die Motorisierung der Drohnen genutzt werden, um die zweiten Luftschiffe zu manövrieren, nachdem die Drohnen sich am zweiten Luftschiff verankert haben.

Die Drohnen können selbst statisch ausgewogen sein oder durch Propellerkraft die Schwerkraft überwinden.

Die bodengestützten Drohnen 4 werden unten oder seitlich an die die zweiten Luftschiffe andocken, und die vom ersten Luftschiff aus agierenden Drohnen 4 werden oben oder seitlich an die zweiten Luftschiffe andocken.

Vorteilhaft ist, wenn die passiven zweiten Luftschiffe über eine Höhensteuerung verfügen um ihre Flughöhe selbst regulieren zu können.

Eine Kombination aus aktivem Manövrieren der zweiten Luftschiffe und passivem Einsammeln ist ebenso denkbar. Dabei würde das zweite Luftschiff einen Teil der von diesem zurückzulegenden Strecke aktiv überwinden und die grobe Positionierung in Bezug zum Landeplatz durchführen. Von der Bodenstation aus oder vom ersten Luftschiff aus würde die dann Feinpositionierung z.B. durch die beschriebenen Drohnen und das Einschleusen der zweiten Luftschiffe gesteuert werden.

Ein Andocken der zweiten Luftschiffe an Masten oder durch das Einfangen durch einen anderen Einfangmechanismus ist ebenfalls möglich.

Unabhängig von den Einzelheiten der praktischen Realisierung des zweiten Luftschiffs ist das zweite Luftschiff dazu ausgelegt, einen Teil der Strecke vom Startort zum Zielort im Inneren des ersten Luftschiffes zurückzulegen.

Wenn das zweite Luftschiff eine eigene Antriebsvorrichtung 25 zum Vortrieb des zweiten Luftschiffs auf den nicht im ersten Luftschiff zurückgelegten Teilen der Strecke zwischen Startort und Zielort aufweist, ist diese Antriebsvorrichtung vorzugsweise autonom steuerbar oder fernsteuerbar.

Unabhängig von den Einzelheiten der praktischen Realisierung des ersten und des einen zweiten Luftschiffs sind diese derart ausgebildet, dass das Beladen des ersten Luftschiffs mit dem mindestens einen zweiten Luftschiff und das Entladen des mindestens einen zweiten Luftschiffs aus dem ersten Luftschiff bei in der Luft schwebendem ersten Luftschiff durchführbar ist.

Wenn das mindestens eine zweite Luftschiff einen eigenen Antrieb, beispielsweise die mindestens eine Antriebsvorrichtung 25 zum Vortrieb des mindestens einen zweiten Luftschiffs aufweist, ist das zweite Luftschiff vorzugsweise derart ausgebildet, dass es unter Verwendung dieses Antriebs
- von einem am Boden befindlichen Terminal zu dem in der Luft schwebenden ersten Luftschiff fliegen kann, und
- von dem in der Luft schwebenden ersten Luftschiff zu dem am Boden befindlichen Terminal fliegen kann.

Zumindest wenn das mindestens eine zweite Luftschiff keinen eigenen Antrieb für den Vortrieb aufweist, ist das mindestens eine zweite Luftschiff so ausgebildet, dass es unter Verwendung einer Drohne oder einer sonstigen externen Transportvorrichtung
- von einem am Boden befindlichen Terminal zum in der Luft schwebenden ersten Luftschiff bringbar ist, und
- von dem in der Luft schwebenden ersten Luftschiff zu dem am Boden befindlichen Terminal bringbar ist.

Unabhängig von alledem kann es sich als vorteilhaft erweisen, wenn Teile des ersten Luftschiffes durch Teile des zweiten Luftschiffs gebildet werden. Beispielsweise kann ein Teil des Außenkontur des ersten Luftschiffs durch einen Teil der Außenkontur eines der im ersten Luftschiff untergebrachten zweiten Luftschiffe gebildet werden.

Das erste Luftschiff könnte also beispielsweise an seiner Außenkontur eine oder mehrere Öffnungen aufweisen, die von im ersten Luftschiff bestimmungsgemäß untergebrachten zweiten Luftschiffen von innen vollständig oder zumindest weitestgehend verschlossen werden. In diesem Fall würde ein Teil der Außenkontur des zweiten Luftschiffes zugleich einen Teil der Außenkontur des ersten Luftschiffes bilden.

Es wäre auch denkbar, dass außen am zweiten Luftschiff vorgesehene Luftschiffkomponenten durch die im ersten Luftschiff vorgesehenen Öffnungen hindurch nach außen ragen und als entsprechende Komponenten des ersten Luftschiffes verwendet werden. Beispielsweise könnte eine für den Vortrieb des zweiten Luftschiffs vorgesehene Antriebsvorrichtung durch die Öffnung im ersten Luftschiff hindurch aus dem ersten Luftschiff herausragen und während des Transports der zweiten Luftschiffe durch das erste Luftschiff als Antriebsvorrichtung des ersten Luftschiffs verwendet werden.

Da die durch die Öffnungen hindurch aus dem ersten Luftschiff herausragenden Teile der zweiten Luftschiffe als entsprechende Komponenten des erste Luftschiffs verwendet werden oder verwendet werden können und daher funktional dem ersten Luftschiff zuzurechnen sind, sind auch in solchen Fällen die zweiten Luftschiffe als vollständig im ersten Luftschiff untergebracht anzusehen.

Mit den wie vorstehend beschrieben ausgebildeten Luftschiffen, genauer gesagt mit dem durch diese gebildeten Luftschiff-System kann eine in dem mindestens einen zweiten Luftschiff geladene Nutzlast transportiert werden.

Ein solcher Nutzlasttransport kann beispielsweise die folgenden Schritte umfassen:
1. Beladen eines zweiten Luftschiffs 2 in einem am Boden befindlichen Start-Terminal mit der Nutzlast,
2. Bewegen des zweiten Luftschiffs 2 zu dem in der Nähe des Start-Terminals in der Luft schwebenden ersten Luftschiff 1,
3. Einladen des zweiten Luftschiffs 2 in den Laderaum des ersten Luftschiffs 1,
4. bei Bedarf Wiederholung der Schritte 1 bis 3 für ein oder mehrere weitere zweite Luftschiffe 2,
5. Flug des ersten Luftschiffs 1 zusammen mit den in sich aufgenommenen zweiten Luftschiffen 2 in die Nähe eines am Boden befindlichen Ziel-Terminals,
6. Entladen eines zweiten Luftschiffs 2 aus dem in der Luft schwebendem ersten Luftschiff 1,
7. Bewegen des zweiten Luftschiffs 2 zu einem am Boden befindlichen Ziel-Terminal,
8. bei Bedarf Wiederholung der Schritte 6 und 7 für ein oder mehrere weitere zweite Luftschiffe 2,
9. bei Bedarf Beladen des ersten Luftschiffes 1 mit keine Nutzlast mehr enthaltenden zweiten Luftschiffen 2,
10. bei Bedarf Weiterflug des ersten Luftschiffs 1 zusammen mit den in sich aufgenommenen zweiten Luftschiffen 2 in die Nähe eines am Boden befindlichen weiteren Ziel-Terminals und dort Wiederholung der Schritte 6 bis 9, und
11. bei Bedarf ein oder mehrmalige Wiederholung des Schrittes 10.

Im betrachteten Beispiel ist es so, dass das erste Luftschiff 1 während des Beladens mit den zweiten Luftschiffen 2 und des Entladens der zweiten Luftschiffe frei in der Luft schwebt. Das heißt, das erste Luftschiff muss sich zum Beladen und zum Entladen weder am Boden befinden, noch über Seile, Masten, oder sonstige Vorrichtungen physisch mit dem Boden verbunden sein. Es muss also weder landen, noch irgendwo andocken, noch eingefangen werden, noch auf sonstige Art und Weise mit dem Boden verbunden werden.

Andererseits ist es aber auch nicht ausgeschlossen, dass das erste Luftschiff 1 während des Beladens mit den zweiten Luftschiffen 2 und des Entladens der zweiten Luftschiffe zwar in der Luft schwebt, aber über Seile, Masten, oder sonstige Vorrichtungen physisch mit dem Boden verbunden ist.

Zum Einladen eines zweiten Luftschiffs 2 in das erste Luftschiff 1 und zum Entladen eines zweiten Luftschiffs 2 aus dem ersten Luftschiff 1 existieren verschiedene Möglichkeiten. Das zweite Luftschiff kann entweder passiv vom ersten Luftschiff eingesammelt bzw. ausgelagert werden, oder unter Verwendung seiner eigenen Antriebsvorrichtung selbständig ins erste Luftschiff einfahren bzw. aus diesem ausfahren.

In diesem Zusammenhang sei darauf hingewiesen, dass das erste Luftschiff 1 während des Beladens und Entladens nicht in der Luft stehen muss. Es kann (eventuell mit verringerter Geschwindigkeit) normal in Richtung seines nächsten Ziels weiterfliegen oder bei abgeschalteter Antriebsvorrichtung frei vom Wind bewegt werden.

Selbstverständlich ist es auch möglich, das erste Luftschiff während des Beladens und Entladens komplett zum Stillstand zu bringen, sodass das erste Luftschiff stationär in der Luft schwebt und keine Bewegung in Bezug auf den Boden erfolgt.

Wenn durch das Luftschiff-System ein durch ein Gas wie beispielsweise Wasserstoff oder durch ein verflüssigtes Gas wie beispielsweise verflüssigter Wasserstoff gebildeter Energieträger transportiert wird, werden das Gas oder das verflüssigte Gas vorzugsweise in in den zweiten Luftschiffen vorgesehenen Drucktanks oder Kryobehältern untergebracht, und wird Gas, das aufgrund von Abdampf- oder Diffusionsverlusten aus den Drucktanks oder Kryobehältern entweicht, als Traggas für das erste Luftschiff und/oder das zweite Luftschiff, und/oder zur Energieversorgung des ersten Luftschiffs und/oder der zweiten Luftschiffe verwendet.

Die zumindest teilweise Verwendung des Luftschiff-Systems für den Transport eines Energieträgers, insbesondere eines Energieträger, aus dem auch zumindest Teile des zum Betrieb des Luftschiff-Systems erforderlichen Traggases und/oder Teile der zum Betrieb des Luftschiff-Systems erforderlichen Energie gewinnbar sind, ermöglicht einen besonders einfachen und effizienten Nutzlast-Transport.

In den Figuren 2A bis 2C ist ein zweites Ausführungsbeispiel 'des hier vorgestellten Luftschiff-Systems gezeigt. Das in den Figuren 1A bis 1C gezeigte erste Luftschiff-System und das in den Figuren 2A bis 2C gezeigte Luftschiff-System stimmen weitestgehend überein. Mit den selben Bezugszeichen bezeichnete Systemkomponenten sind identische oder einander entsprechende Systemkomponenten und werden zur Vermeidung von Wiederholungen hier nicht mehr erneut beschrieben. Sofern nicht ausdrücklich etwas anderes erwähnt ist, gilt das zum Luftschiff-System gemäß den Figuren 1A bis 1C Gesagte auch für das Luftschiff-System gemäß den Figuren 2A bis 2C.

Der einzige wesentliche Unterschied zwischen den beiden Luftschiff-Systemen besteht darin, dass die zweiten Luftschiffe 2 anders innerhalb des ersten Luftschiffs 1 angeordnet sind. Genauer gesagt sind die zweiten Luftschiffe in einer einzigen Reihe schräg und nebeneinander liegend im ersten Luftschiff angeordnet. Das heißt, anders als beim ersten Ausführungsbeispiel verlaufen die Längsrichtungen der zweiten Luftschiffe nicht mehr parallel zur Längsrichtung des ersten Luftschiffs. Vielmehr sind die Längsrichtungen horizontal um einen gewissen Winkel gegeneinander verdreht, wobei der Winkel größer als 0° und kleiner als 90° ist.

In diesem Zusammenhang sei angemerkt, dass es auch möglich ist, die zweiten Luftschiffe 2 quer im ersten Luftschiff unterzubringen, sodass also die Längsrichtung des ersten Luftschiffs und die Längsrichtung der zweiten Luftschiffe um 90° gegeneinander verdreht sind. Dass der Winkel auch 0° betragen kann, ergibt sich schon aus dem in den Figuren 1A bis 1C gezeigten ersten Ausführungsbeispiel. Prinzipiell können die zweiten Luftschiffe in einer beliebigen Ausrichtung in Bezug zum ersten Luftschiff nebeneinander und/oder übereinander im ersten Luftschiff untergebracht sein.

Außerdem ist das in den Figuren 2A bis 2C gezeigte erste Luftschiff dazu ausgelegt, über seitliche Öffnungen von der Seite her beladen zu werden. Dies ist in der Figur 2A veranschaulicht. Dort ist gezeigt, wie gerade zwei zweite Luftschiffe ein- oder ausfahren. Die zweiten Luftschiffe können grundsätzlich in beliebigen Winkeln in das erste Luftschiff ein- und ausfahren. Die schräge Beladung ermöglicht die Nutzung von zweiten Luftschiffen, die länger sind als das erste Luftschiff breit ist.

Sowohl bei dem in den Figuren 1A bis 1C gezeigten Luftschiff-System den als auch bei dem in den Figuren 2A bis 2C gezeigten Luftschiff-System wäre übrigens auch ein Beladen und Entladen des ersten Luftschiffs von unten her möglich.

Vorliegend kommt also für den Transport von Energieträgern, insbesondere für den Transport Wasserstoff, die Luftschifftechnologie zum Einsatz, wobei der zu transportierende Wasserstoff gleichzeitig auch als Traggas und für die Energieversorgung des Luftschiff-Systems verwendbar ist.

Die großen ersten Luftschiffe pendeln beispielsweise zwischen Energieerzeugerstandorten und Abnahmestandorten. Sie transportieren die kleineren zweiten Luftschiffe, die mit Wasserstoff beladen sind. Diese zweiten Luftschiffe werden an den Energieerzeugerstandorten vom ersten Luftschiff aufgenommen und an den Abnahmestandorten entladen.

Die ersten Luftschiffe sind auf die Überwindung der Strecke zwischen Erzeuger- und Abnahmestandorten spezialisiert. Eine Landung oder ein Andocken der ersten Luftschiffe ist nicht vorgesehen. Sie benötigen daher keine Funktionen der Ballastaufnahme, keine genaue Positionierfähigkeit, und keine Landefähigkeit, die auf die Nutzlast ausgerichtet sind. Sie müssen nur sehr groß und hinreichend stark motorisiert sein.

Die die Nutzlast enthaltenen Systemkomponenten sind ebenfalls Luftschiffe, jedoch in einer gut bekannten und handhabbaren Größenordnung von 20 -100 m Länge. Sie verfügen über eine Motorisierung, Möglichkeiten zur Ballastaufnahme, sowie über eine genaue Positionierfähigkeit und Andockfähigkeit, jedoch ist die Reichweite begrenzt.

Diese zweiten Luftschiffe sind immer gravimetrisch ausbalanciert bzw. statisch ausgewogen. Das heißt die ein jeweiliges zweites Luftschiff nach unten ziehende Gewichtskraft entspricht stets in etwa der auf das zweite Luftschiff wirkenden, durch das Traggas erzeugte Auftriebskraft. So erfolgt am Abnahmestandort neben der vollständigen Abgabe der Nutzlast auch eine teilweise Entnahme des als Traggas genutzten Wasserstoffes, sodass das zweite Luftschiff mit dem verbleibenden Traggas die Rückreise zum ersten Luftschiff statisch ausgewogen antreten können.

Somit ist sichergestellt, dass die ersten Luftschiffe selbst nur geringe Ballastaufnahmekapazitäten vorhalten müssen um z.B. ihre eigene Höhensteuerung gewährleisten zu können. Da die zweiten Luftschiffe selbst über Positionierfähigkeit verfügen, ist dies bei den ersten Luftschiffen nicht vorgesehen und vereinfacht das Konzept stark, da das Bodenhandlung eines großen Luftschiffes nach wie vor nicht befriedigend gelöst ist.

Diese Technologie kann dezentral eingesetzt werden und ist skalierbar in Größe und Anzahl der einzusetzenden Luftschiffe. Ein direkter Transport zum Endverbraucher ist genauso durchführbar, wie die Ansteuerung von Energieterminals mit Anschluss an ein Wasserstoff-Pipelinenetzwerk.

**Es wäre auch** ein Luftschiff-System denkbar, das ein motorisiertes Transportluftschiff und mehrere passive oder motorisierte weitere Luftschiffe umfasst, die dann in einer Kette, an deren vorderem Ende sich das Transportluftschiff befindet, den Transport von einem Startort zu einem Zielort absolvieren.

Das erste Luftschiff ist so dimensioniert, dass es mehrere passive, autonom oder ferngesteuert agierende zweite Luftschiffe aufnehmen kann. Die ersten Luftschiffe dienen ausschließlich dem Pendeln zwischen Energieerzeugungs- und Energieabnahmeregion und stellen den Transportraum sowie den Antrieb für die Reise zur Verfügung. Sie sind in der Lage beliebige Strecken zurückzulegen und beziehen ihre Energie zumindest teilweise aus den Abdampf- und Diffusionsverlusten des transportierten Wasserstoffes und/oder aus in der Hülle eingebauten Solarzellen. Zum Austarieren der Höhe werden entweder als Traggas dienender Wasserstoff (Reduzierung des Auftriebs) oder flüssige Energieträger (Erhöhung des Auftriebs) für den Vortrieb genutzt. Das Haupttraggas besteht aus unbrennbarem Helium oder zum Teil oder vollständig aus gasförmigem Wasserstoff.

Um z.B. Abdampfverluste des flüssig transportierten Wasserstoffs zu nutzen, können die Tanks für den flüssigen Wasserstoff der zweiten Luftschiffe über ein Rohrleitungssystem an die Energieversorgung des ersten Luftschiffs angeschlossen werden. Da das erste Luftschiff einen großen Energiebedarf für den Vortrieb hat, stellt der abdampfende Wasserstoff eine sinnvoll nutzbare Energiequelle das. Daher müssen die Tanks für den flüssigen Wasserstoff bei diesem Konzept nicht dazu ausgelegt sein, möglichst geringe Abdampfverluste zuzulassen und können gewichtsoptimiert ausgebildet werden. Durch die Hüllen der zweiten Luftschiffe diffundierender Wasserstoff oder frei abgedampfter Wasserstoff sammelt sich im oberen Bereich des ersten Luftschiffes und wird dort entnommen. Dazu werden ganz oben Wasserstofffallen installiert. Sollte der Wasserstoff sich nicht sinnvoll sammeln lassen, werden in diesem Bereich Austrittsöffnungen für den Wasserstoff vorgesehen, damit die kritische Konzentration (< 4 Vol.%) von Wasserstoff in der Umgebungsatmosphäre nicht überschritten wird. Weiterhin sind Katalysatoren nutzbar, um den freien Wasserstoff zusammen mit dem atmosphärischen Sauerstoff in als Ballast nutzbares Wasser zu katalysieren.

Das Aus- und Einschiffen der zweiten Luftschiffe erfolgt vorzugsweise in niedriger bis mittlerer Flughöhe (50 m - 1000 m) bei niedrigen Geschwindigkeiten (0 - 50 km/h). Vorzugsweise sind die zweiten Luftschiffe so ausgebildet, dass sie keine Menschen an Bord benötigen und sich autonom oder ferngesteuert im Luftraum bewegen.

Im betrachteten Beispiel liegt die Nutzlast in den zweiten Luftschiffen in Form von gasförmigem Wasserstoff in Umgebungsdruck für den Auftrieb sowie in Hochdrucktanks und/oder flüssiger Form, oder als beliebige flüssige oder feste Energieträger vor.

Die zweiten Luftschiffe weisen vorzugsweise elektrische Antriebsvorrichtungen auf, die eine gute Manövrierfähigkeit mit hinreichender Reichweite erlauben.

Das erste Luftschiff ist vorzugsweise 200 - 800 m lang und hat ein aerodynamisch günstiges Längen- zu Durchmesserverhältnis. Eine Form mit aerodynamischem Auftrieb bei Reisegeschwindigkeit erlaubt einen einfachen Betrieb in optimaler Höhe.

Wenn passive zweite Luftschiffe zum Einsatz kommen und diese vor dem Transport zum ersten Luftschiff beispielsweise durch Seile am Boden gefesselt sind, ist es vorteilhaft, das erste Luftschiff bezüglich des Bodens zum Stehen zu bringen, um die Übergabe des zweiten Luftschiffs an das erste Luftschiff zu vereinfachen. Wenn solche zweiten Luftschiffe schwebend in die Luft entlassen werden, kann es hingegen vorteilhaft sein, wenn das erste Luftschiff bezogen auf die Luftströmung eine möglichst geringe Relativgeschwindigkeit aufweist. Ob und gegebenenfalls wie sich das erste Luftschiff während des Be- und Entladens bewegt, wird als vorzugsweise von den jeweilgen Verhältnissen anhängig gemacht.

Die Antriebsvorrichtungen 16 des ersten Luftschiffs sind vorzugsweise mit Elektromotoren betriebene Propeller, bei Bedarf mit Schubvektorfunktion. Diese Antriebsvorrichtungen sind an der Struktur des ersten Luftschiffes verteilt, und zwar möglichst so, dass die Einleitung der Kräfte in die Struktur verteilt ist, damit Kräfte die durch Wind und oder Trägheit entstehen, bestmöglich ausgeglichen werden und die Struktur wenige Kräfte weit übertragen muss. Die Energiezufuhr für den Vortrieb und die Steuerung erfolgt vorzugweise aus Batterien, Solarzellen und über Brennstoffzellen die aus dem mitgeführten H₂-Gas gespeist werden, wobei insbesondere die Abdampfverluste des zu transportierenden flüssigen Wasserstoffs aufgefangen und genutzt werden sollten. Gasturbinen für einen Direktantrieb oder zur Stromgewinnung sind in weiteren Ausführungen ebenso denkbar. Klassische Leitwerke in Kreuz- der Stern-Anordnung sorgen für einen stabilen Flug bei Reisegeschwindigkeit. Die Reisegeschwindigkeit selbst ergibt sich aus Parametern wie Wirtschaftlichkeit, Entfernungen, Verfügbarkeit, Haltbarkeit und Bedarf an Rohstoffen. Sie kann beispielsweise zwischen 1oo km/h und 400 km/h liegen, wobei hierauf jedoch keine Einschränkung besteht.

Wie vorstehend bereits erwähnt wurde, sind die die Nutzlast enthaltenden Systemkomponenten, also die zweiten Luftschiffe, ebenfalls Luftschiffe im klassischen Sinne. Ihr Durchmesser und ihre Länge sind derart, dass z.B. zwei oder drei Transporter nebeneinander im ersten Luftschiff Platz finden, wenn sie längs angeordnet sind, oder dass die zweiten Luftschiffe quer im ersten Luftschiff liegen können. Die zweiten Luftschiffe in einer ersten Ausführungsform über eine Batterie-gepufferte Motorisierung verfügen, die eine Manövrierfähigkeit gewährleistet, sodass sie autonom oder ferngesteuert in das erste Luftschiff ein- und aus diesem zur Abgabe der Energieladung ausfahren können. Die zweiten Luftschiffe besitzen darüber hinaus eine Höhensteuerung sowie Positionier- und Andockfähigkeiten. Es sind in weiteren Ausführungsformen auch zweite Luftschiffe denkbar, die über reduzierte oder keine Antriebsfähigkeit verfügen, bei denen dann das Handling vom Boden bzw. aus dem ersten Luftschiff heraus gewährleistet wird.

Die ersten Luftschiffe haben vorzugsweise eine Transportkapazität von 2 - 16 zweiten Luftschiffen, wobei die genaue Anzahl durch die Größen des ersten Luftschiffs der zweiten Luftschiffe, sowie das Transportkonzept definiert wird.

Das Be- und Entladen des ersten Luftschiffes kann durch paralleles Aus- und Einschiffen der zweiten Luftschiffe erfolgen. Am Energieproduktionsort werden volle Transporter geladen und leere Transporter entladen. Leer sind die zweiten Luftschiffe, sobald die flüssige oder feste Nutzlast entladen und das Traggas soweit abgepumpt wurde bis die zweiten Luftschiffe statisch ausgewogen sind. Voll sind die zweiten Luftschiffe, wenn der maximal verfügbare Auftrieb durch das Traggas mit Nutzlast soweit ausgeglichen ist, dass die zweiten Luftschiffe wieder statisch ausgewogen sind.

Die Auftriebselemente des ersten Luftschiffs dienen hauptsächlich dem Ausgleich der Gewichtskräfte seiner eigenen Struktur, seines Antriebs und aller weiteren zum Betrieb notwendigen Komponenten, jedoch nicht zum Ausgleich von statisch nicht ausgewogenen zweiten Luftschiffen. Daher ist auch die Auftriebskontrolle vergleichsweise stark vereinfacht gegenüber klassischen Luftschiffen, die ein Nutzlastgewicht durch Veränderung des mitgeführten Ballasts (meist Wasser) ausgleichen. Die zu transportierenden zweiten Luftschiffe werden daher durch das erste Luftschiff lediglich beschleunigt und abgebremst, jedoch im Wesentlichen nicht angehoben oder abgesenkt. Die Motoren des ersten Luftschiffes müssen also - bezogen auf die Nutzlast - im Wesentlichen ausschließlich Trägheitskräfte überwinden.

Klassische Luftschiffe nutzen die Hülle sowohl für die außengebende Form als auch für die Übertragung aller auftretenden Kräfte.

Bei dem hier vorgestellten Luftschiff-System verursachen die zweiten Luftschiffe ausschließlich größere Trägheitskräfte auf die Struktur des ersten Luftschiffs. Dadurch kann die Hülle entlastet werden und vollständig für Aerodynamik und Wetterschutz optimiert werden.

Das hier vorgestellte Luftschiff-System ermöglicht eine klassische Bauweise als Starrluftschiff für die Hülle und die Traggaszellen, beinhaltet zusätzlich eine sehr große Ladezone, in der die zweiten Luftschiffe untergebracht werden.

Vorteil der Erfindung ist dabei eine Trennung von Transportvehikel und standardisierten Nutzlast-Luftschiffen. Die Be- und Entladung der ersten Luftschiffe kann sehr schnell erfolgen. Die Bodeninfrastruktur wird dabei lediglich auf das Handling der deutlich kleineren zweiten Luftschiffe ausgelegt sein müssen. Dieser Lösungsansatz bietet hohe Füllfaktoren, Redundanzen, und geringstmögliche Komplexität für alle Komponenten.

Der Vollständigkeit halber sei angemerkt, dass sowohl das erste Luftschiff als auch die zweiten Luftschiffe unabhängig voneinander eine starre, halbstarre oder flexible Außenhülle aufweisen können. Das heißt, es besteht keine zwingende Notwendigkeit, eine ganz bestimmte Art von Außenhülle vorzusehen.

Das hier vorgestellte Luftschiff-System erweist sich unabhängig von den Einzelheiten der praktischen Realisierung als äußerst vorteilhaft. Durch dieses lassen sich Wasserstoff und sonstige Energieträger, aber auch beliebige andere Nutzlasten besonders einfach und effizient von einem Startort zu einem Zielort transportieren.

### Bezugszeichenliste

- 1: erstes Luftschiff
- 2: zweites Luftschiff
- 3: Bodenstation
- 4: Drohne

- 11: Be- und Entladeöffnung von 1
- 12: Klappen zum Öffnen und Schließen von 11
- 13: Positionier- und Fixiersystem in 1
- 14: obere Auftriebsstruktur in 1
- 15: untere Auftriebsstruktur in 1
- 16: Antriebsvorrichtung von 1

- 21: Nutzlastabschnitt von 2
- 22: Auftriebsstruktur von 2
- 23: Nutzgasabschnitt von 2
- 24: Tragstruktur von 2
- 25: Antriebsvorrichtung von 2

- 41: Seil zwischen 3 und 4
- 42: Seil zwischen 2 und 3

## Patentansprüche

1. Luftschiff-System, welches ein erstes Luftschiff (1) und mindestens ein zweites Luftschiff (2) umfasst, wobei das mindestens eine zweite Luftschiff zur Aufnahme einer durch das Luftschiff-System zu transportierenden Nutzlast ausgelegt ist, und wobei das erste Luftschiff dazu ausgelegt ist, mehrere zweite Luftschiffe vollständig in sich aufzunehmen, und zusammen mit diesen von einem Startort zu einem Zielort zu fliegen, wobei das mindestens eine zweite Luftschiff (2) ein Traggas enthält, **dadurch gekennzeichnet, dass** das Traggas leichter ist als Luft und eine auf das zweite Luftschiff wirkende Auftriebskraft erzeugt, und wobei Art, Menge, und Eigenschaften des Traggases derart sind, dass das zweite Luftschiff während des Transports durch das erste Luftschiff statisch ausgewogen schwebt.

2. Luftschiff-System nach Anspruch 1, **dadurch gekennzeichnet, dass** das erste Luftschiff in seiner Außenkontur mindestens eine Öffnung aufweist, die von Teilen der Außenkontur eines der vom ersten Luftschiff in sich aufgenommenen zweiten Luftschiffe von innen verschlossen und/oder durchlaufen wird, sodass ein Teil der Außenkontur des ersten Luftschiffs durch einen Teil der Außenkontur des mindestens einen zweiten Luftschiffs gebildet wird.

3. Luftschiff-System nach einem der vorhergehenden Ansprüche, **dadurch gekennzeichnet, dass** das erste Luftschiff (1) und das mindestens eine zweite Luftschiff (2) derart ausgebildet sind, dass das Beladen des ersten Luftschiffs mit dem mindestens einen zweiten Luftschiff und das Entladen des mindestens einen zweiten Luftschiffs aus dem ersten Luftschiff bei in der Luft schwebendem ersten Luftschiff durchführbar sind.

4. Luftschiff-System nach Anspruch 3, **dadurch gekennzeichnet, dass** das mindestens eine zweite Luftschiff (2) mindestens eine eigene Antriebsvorrichtung (25) aufweist, und dass das mindestens eine zweite Luftschiff dazu ausgelegt ist, unter Verwendung der mindestens einen Antriebsvorrichtung (25)
- von einem am Boden befindlichen Terminal zu dem in der Luft schwebenden ersten Luftschiff zu fliegen, und
- von dem in der Luft schwebenden ersten Luftschiff zu dem am Boden befindlichen Terminal zu fliegen.

5. Luftschiff-System nach Anspruch 3, **dadurch gekennzeichnet, dass** das mindestens eine zweite Luftschiff (2) dazu ausgelegt ist, unter Verwendung einer Drohne oder einer externen Transportvorrichtung
- von einem am Boden befindlichen Terminal zum in der Luft schwebenden ersten Luftschiff gebracht zu werden, und
- von dem in der Luft schwebenden ersten Luftschiff zu dem am Boden befindlichen Terminal gebracht zu werden.

6. Luftschiff-System nach einem der vorhergehenden Ansprüche, **dadurch gekennzeichnet, dass** das erste Luftschiff (1) in seinem Inneren einen Laderaum aufweist, und dass der Laderaum zur vollständigen Aufnahme der die Nutzlast geladen habenden zweiten Luftschiffe (2) in sich ausgelegt ist.

7. Luftschiff-System nach Anspruch 6, **dadurch gekennzeichnet,**
- **dass** es in seinem Inneren einen oder mehrere Auftriebsstrukturen (14, 15) zur Aufnahme eines Traggases enthält, wobei das Traggas leichter ist als Luft und eine auf das Luftschiff (1) wirkende Auftriebskraft erzeugt,
- **dass** das Luftschiff ferner mindestens eine Antriebsvorrichtung (16) aufweist, mit Hilfe welcher das Luftschiff (1) vom Startort zum Zielort bewegbar ist, und
- **dass** die mindestens eine Antriebsvorrichtung (16) dazu auslegt ist, die von ihr benötigte Energie zumindest teilweise aus dem Traggas und/oder der Nutzlast zu gewinnen.

8. Luftschiff-System nach Anspruch 6 oder 7, **dadurch gekennzeichnet, dass** das Traggas zumindest teilweise durch einen Teil eines die Nutzlast bildenden Gases, oder durch ein aus der Nutzlast oder den weiteren Luftschiffen (2) entweichendes Gas, oder durch ein aus der Nutzlast gewonnenes Gas gebildet wird.

9. Luftschiff-System nach einem der vorhergehenden Ansprüche, **dadurch gekennzeichnet, dass** das zweite Luftschiff (2) in seinem Inneren einen Nutzlastabschnitt (21) zur Aufnahme der Nutzlast in sich und eine oder mehrere Auftriebsstrukturen (22) zur Aufnahme eines Traggases enthält, wobei das Traggas leichter ist als Luft und eine auf das Luftschiff wirkende Auftriebskraft erzeugt, und dass das Luftschiff dazu ausgelegt ist, einen Teil der Strecke vom Startort zum Zielort im Laderaum des ersten Luftschiffes (1) zurückzulegen.

10. Luftschiff-System nach Anspruch 9, **dadurch gekennzeichnet, dass** das Luftschiff (2) mindestens eine eigene Antriebsvorrichtung (25) zum Vortrieb des Luftschiffs auf den nicht im anderen Luftschiff (1) zurückgelegten Teilen der Strecke zwischen Startort und Zielort aufweist, und dass die mindestens eine eigene Antriebsvorrichtung autonom steuerbar oder fernsteuerbar ist.

11. Verfahren zum Transportieren einer Nutzlast, **dadurch gekennzeichnet, dass** der Nutzlast-Transport unter Verwendung des Luftschiff-Systems nach einem der vorhergehenden Ansprüche erfolgt.

12. Verfahren nach Anspruch 11, **dadurch gekennzeichnet, dass** der Transport der Nutzlast folgende Schritte umfasst:
1. Beladen eines zweiten Luftschiffs (2) in einem am Boden befindlichen Start-Terminal mit der Nutzlast,
2. Bewegen des zweiten Luftschiffs (2) zu dem in der Nähe des Start-Terminals in der Luft schwebenden ersten Luftschiff (1),
3. Einladen des zweiten Luftschiffs (2) in den Laderaum des ersten Luftschiffs (1),
4. bei Bedarf Wiederholung der Schritte 1 bis 3 für ein oder mehrere weitere zweite Luftschiffe (2),
5. Flug des ersten Luftschiffs (1) zusammen mit den in sich aufgenommenen zweiten Luftschiffen (2) in die Nähe eines am Boden befindlichen Ziel-Terminals,
6. Entladen eines zweiten Luftschiffs (2) aus dem in der Luft schwebendem ersten Luftschiff (1),
7. Bewegen des zweiten Luftschiffs (2) zu einem am Boden befindlichen Ziel-Terminal,
8. bei Bedarf Wiederholung der Schritte 6 und 7 für ein oder mehrere weitere zweite Luftschiffe (2),
9. bei Bedarf Beladen des ersten Luftschiffes (1) mit keine Nutzlast mehr enthaltenden zweiten Luftschiffen (2),
10. bei Bedarf Weiterflug des ersten Luftschiffs (1) zusammen mit den in sich aufgenommenen zweiten Luftschiffen (2) in die Nähe eines am Boden befindlichen weiteren Ziel-Terminals und dort Wiederholung der Schritte 6 bis 9, und
11. bei Bedarf ein oder mehrmalige Wiederholung des Schrittes 10.

13. Verfahren nach Anspruch 11 oder 12, **dadurch gekennzeichnet,**
- **dass** als Nutzlast ein durch ein Gas oder ein verflüssigtes Gas gebildeter Energieträger transportiert wird,
- **dass** das Gas oder das verflüssigte Gas in in den zweiten Luftschiffen vorgesehenen Drucktanks oder Kryobehältern untergebracht ist, und
- **dass** Gas, das aufgrund von Abdampf- oder Diffusionsverlusten aus den Drucktanks oder Kryobehältern entweicht, als Traggas für das erste Luftschiff und/oder das zweite Luftschiff, und/oder zur Energieversorgung des ersten Luftschiffs und/oder der zweiten Luftschiffe verwendet wird.

14. Verfahren nach einem der Ansprüche 11 bis 13, **dadurch gekennzeichnet, dass** das Luftschiff-System für den Transport einer durch einen Energieträger gebildeten Nutzlast, insbesondere für den Transport eines Energieträgers, aus dem auch zumindest Teile des zum Betrieb des Luftschiff-Systems erforderlichen Traggases und/oder Teile der zum Betrieb des Luftschiff-Systems erforderlichen Energie gewinnbar sind, verwendet wird.

## Claims

1. Airship system which comprises a first airship (1) and at least one second airship (2), wherein the at least one second airship is configured to hold a payload to be transported by the airship system, and wherein the first airship is configured to completely hold multiple second airships therein, and to fly together therewith from a starting point to a destination, wherein the at least one second airship (2) contains a carrier gas, **characterized in that** the carrier gas is lighter than air and generates a lift force acting on the second airship, and wherein the type, quantity, and properties of the carrier gas are such that the second airship hovers, statically balanced, while being transported by the first airship.

2. Airship system according to Claim 1, **characterized in that** the first airship in its outer contour has at least one opening which is closed and/or passed through from the inside by parts of the outer contour of one of the second airships held in the first airship, so that part of the outer contour of the first airship is formed by part of the outer contour of the at least one second airship.

3. Airship system according to either of the preceding claims, **characterized in that** the first airship (1) and the at least one second airship (2) are designed in such a way that it is possible to load the first airship with the at least one second airship and to unload the at least one second airship from the first airship while the first airship is hovering in the air.

4. Airship system according to Claim 3, **characterized in that** the at least one second airship (2) has at least one drive device (25) of its own, and **in that** the at least one second airship is configured to, using the at least one drive device (25),
- fly from a terminal located on the ground to the first airship, which is hovering in the air, and
- fly from the first airship, which is hovering in the air, to the terminal located on the ground.

5. Airship system according to Claim 3, **characterized in that** the at least one second airship (2) is configured to, using a drone or an external transport device,
- be brought from a terminal located on the ground to the first airship, which is hovering in the air, and
- be brought from the first airship, which is hovering in the air, to the terminal located on the ground.

6. Airship system according to one of the preceding claims, **characterized in that** inside the first airship (1) there is a cargo space, and **in that** the cargo space is configured to completely hold therein the second airship (2) that has been loaded with the payload.

7. Airship system according to Claim 6, **characterized**
- **in that** it contains inside it one or more lift-force structures (14, 15) for holding a carrier gas, wherein the carrier gas is lighter than air and generates a lift force acting on the airship (1),
- **in that** the airship also has at least one drive device (16) by means of which the airship (1) can be moved from the starting point to the destination, and
- **in that** the at least one drive device (16) is configured to obtain the energy it needs at least partially from the carrier gas and/or the payload.

8. Airship system according to Claim 6 or 7, **characterized in that** the carrier gas is formed at least partially by some of a gas forming the payload, or by a gas escaping from the payload or the further airships (2), or by a gas obtained from the payload.

9. Airship system according to one of the preceding claims, **characterized in that** the second airship (2) contains inside it a payload portion (21) for holding the payload therein and one or more lift-force structures (22) for holding a carrier gas, wherein the carrier gas is lighter than air and generates a lift force acting on the airship, and **in that** the airship is configured to spend part of the journey from the starting point to the destination in the cargo space of the first airship (1).

10. Airship system according to Claim 9, **characterized in that** the airship (2) has at least one drive device (25) of its own for propulsion of the airship on those parts of the journey between the starting point and the destination that it does not spend in the first airship (1), and **in that** the at least one drive device of its own is autonomously controllable or remotely controllable.

11. Method for transporting a payload, **characterized in that** the payload is transported using the airship system according to one of the preceding claims.

12. Method according to Claim 11, **characterized in that** the transporting of the payload comprises the following steps:
1. loading a second airship (2) with the payload in a starting terminal located on the ground;
2. moving the second airship (2) to the first airship (1), which is hovering in the air in the vicinity of the starting terminal;
3. loading the second airship (2) into the cargo space of the first airship (1);
4. as and when required, repeating steps 1 to 3 for one or more further second airships (2),
5. flying the first airship (1), together with the second airships (2) held therein, into the vicinity of a destination terminal located on the ground;
6. unloading a second airship (2) from the first airship (1), which is hovering in the air;
7. moving the second airship (2) to a destination terminal located on the ground;
8. as and when required, repeating steps 6 and 7 for one or more further second airships (2),
9. as and when required, loading the first airship (1) with second airships that no longer contain a payload (2),
10. as and when required, flying the first airship (1), together with the second airships (2) held therein, onward into the vicinity of a further destination terminal located on the ground and repeating steps 6 to 9 there, and
11. as and when required, repeating step 10 once or more than once.

13. Method according to Claim 11 or 12, **characterized**
- **in that** the payload transported is an energy carrier formed by a gas or a liquefied gas,
- **in that** the gas or the liquefied gas is stored in pressurized tanks or cryogenic vessels provided in the second airships, and
- **in that** gas escaping from the pressurized tanks or cryogenic vessels owing to evaporation or diffusion losses is used as carrier gas for the first airship and/or the second airship, and/or for supplying energy to the first airship and/or the second airships.

14. Method according to one of Claims 11 to 13, **characterized in that** the airship system is used to transport a payload formed by an energy carrier, in particular to transport an energy carrier from which at least some of the carrier gas required for operation of the airship system and/or some of the energy required for operation of the airship system can also be obtained.

## Revendications

1. Système d'aéronef qui comprend un premier aéronef (1) et au moins un deuxième aéronef (2), dans lequel ledit au moins un deuxième aéronef est conçu pour recevoir une charge utile à transporter par le système d'aéronef et dans lequel le premier aéronef est conçu pour recevoir complètement plusieurs deuxièmes aéronefs en son sein et pour voler, ensemble avec ceux-ci, depuis un site de départ jusqu'à un site cible, dans lequel ledit au moins un deuxième aéronef (2) contient un gaz porteur, **caractérisé en ce que** le gaz porteur est plus léger que l'air et génère une portance agissant sur le deuxième aéronef et dans lequel le type, la quantité et les propriétés du gaz porteur sont tels que le deuxième aéronef flotte de manière statiquement équilibrée pendant le transport par le première aéronef.

2. Système d'aéronef selon la revendication 1, **caractérisé en ce que** le premier aéronef présente, dans son contour externe, au moins une ouverture qui est fermée et/ou traversée depuis l'intérieur par des parties du contour externe d'un des deuxièmes aéronefs logés au sein du premier aéronef de telle sorte qu'une partie du contour externe du premier aéronef est formée par une partie du contour externe dudit au moins un deuxième aéronef.

3. Système d'aéronef selon l'une des revendications précédentes, **caractérisé en ce que** le premier aéronef (1) et ledit au moins un deuxième aéronef (2) sont réalisés de telle sorte que le chargement du premier aéronef par ledit au moins un deuxième aéronef et le déchargement dudit au moins un deuxième aéronef à partir du premier aéronef peuvent être effectués lorsque le premier aéronef flotte dans l'air.

4. Système d'aéronef selon la revendication 3, **caractérisé en ce que** ledit au moins un deuxième aéronef (2) présente au moins un dispositif d'entraînement (25) qui lui est propre et **en ce que** ledit au moins un deuxième aéronef est conçu pour, à l'aide dudit au moins un deuxième dispositif d'entraînement (25),
- voler depuis un terminal se trouvant sur le sol jusqu'au premier aéronef flottant dans l'air et
- voler depuis le premier aéronef flottant dans l'air jusqu'au terminal se trouvant sur le sol.

5. Système d'aéronef selon la revendication 3, **caractérisé en ce que** ledit au moins un deuxième aéronef (2) est conçu pour, à l'aide d'un drone ou d'un dispositif de transport externe,
- être amené depuis un terminal se trouvant sur le sol au premier aéronef flottant dans l'air et
- être amené depuis le premier aéronef flottant dans l'air au terminal se trouvant sur le sol.

6. Système d'aéronef selon l'une des revendications précédentes, **caractérisé en ce que** le premier aéronef (1) présente, dans son intérieur, un espace de chargement et **en ce que** l'espace de chargement est conçu pour la réception complète en son sein des deuxièmes aéronefs (2) chargés de la charge utile.

7. Système d'aéronef selon la revendication 6, **caractérisé**
- **en ce qu'**il contient, dans son intérieur, une ou plusieurs structures de portance (14, 15) destinées à recevoir un gaz porteur, le gaz porteur étant plus léger que l'air et générant une portance agissant sur l'aéronef (1),
- **en ce que** l'aéronef présente en outre au moins un dispositif d'entraînement (16) à l'aide duquel l'aéronef (1) peut être déplacé depuis le site de départ jusqu'au site cible et
- **en ce que** ledit au moins un dispositif d'entraînement (16) est conçu pour obtenir l'énergie dont il a besoin au moins partiellement à partir du gaz porteur et/ou de la charge utile.

8. Système d'aéronef selon la revendication 6 ou 7, **caractérisé en ce que** le gaz porteur est formé au moins partiellement par une partie d'un gaz formant la charge utile ou par un gaz s'échappant de la charge utile ou des autres aéronefs (2) ou par un gaz obtenu à partir de la charge utile.

9. Système d'aéronef selon l'une des revendications précédentes, **caractérisé en ce que** le deuxième aéronef (2) contient dans son intérieur une section à charge utile (21) destinée à recevoir la charge utile en son sein et une ou plusieurs structures de portance (22) destinées à recevoir un gaz support, le gaz support étant plus léger que l'air et générant une portance agissant sur l'aéronef et **en ce que** l'aéronef est conçu pour parcourir une partie du trajet depuis le site de départ jusqu'au site cible dans l'espace de chargement du premier aéronef (1).

10. Système d'aéronef selon la revendication 9, **caractérisé en ce que** l'aéronef (2) présente au moins un dispositif d'entraînement (25) qui lui est propre pour la propulsion de l'aéronef sur les parties du trajet entre le site de départ et le site cible qui ne sont pas parcourues dans l'autre aéronef (1) et **en ce que** ledit au moins un dispositif d'entraînement qui lui est propre peut être commandé de manière autonome ou télécommandé.

11. Procédé pour le transport d'une charge utile, **caractérisé en ce que** le transport de la charge utile est effectué à l'aide du système d'aéronef selon l'une des revendications précédentes.

12. Procédé selon la revendication 11, **caractérisé en ce que** le transport de la charge utile comprend les étapes suivantes :
1. chargement d'un deuxième aéronef (2) par la charge utile dans un terminal de départ se trouvant sur le sol,
2. déplacement du deuxième aéronef (2) jusqu'au premier aéronef (1) flottant dans l'air à proximité du terminal de départ,
3. chargement du deuxième aéronef (2) dans l'espace de chargement du premier aéronef (1),
4. si nécessaire, répétition des étapes 1 à 3 pour un ou plusieurs autres deuxièmes aéronefs (2),
5. vol du premier aéronef (1) ensemble avec les deuxièmes aéronefs (2) logés en son sein jusqu'à proximité d'un terminal cible se trouvant sur le sol,
6. déchargement d'un deuxième aéronef (2) à partir du premier aéronef (1) flottant dans l'air,
7. déplacement du deuxième aéronef (2) jusqu'à un terminal cible se trouvant sur le sol,
8. si nécessaire, répétition des étapes 6 et 7 pour un ou plusieurs autres deuxièmes aéronefs (2),
9. si nécessaire, chargement du premier aéronef (1) par des deuxièmes aéronefs (2) ne contenant plus de charge utile,
10. si nécessaire, suite du vol du premier aéronef (1) ensemble avec les deuxièmes aéronefs (2) logés en son sein jusqu'à proximité d'un autre terminal cible se trouvant sur le sol et, en cet endroit, répétition des étapes 6 à 9 et
11. si nécessaire, une ou plusieurs répétitions de l'étape 10.

13. Procédé selon la revendication 11 ou 12, **caractérisé**
- **en ce qu'**une source d'énergie formée par un gaz ou un gaz liquéfié est transportée en tant que charge utile,
- **en ce que** le gaz ou le gaz liquéfié est logé dans des réservoirs sous pression ou des réservoirs cryogéniques prévus dans les deuxièmes aéronefs et
- **en ce que** le gaz qui s'échappe en raison de pertes par évaporation ou par diffusion à partir des réservoirs sous pression ou des réservoirs cryogéniques est utilisé comme gaz porteur pour le premier aéronef et/ou le deuxième aéronef et/ou pour l'alimentation en énergie du premier aéronef et/ou du deuxième aéronef.

14. Procédé selon l'une des revendications 11 à 13, **caractérisé en ce que** le système d'aéronef est utilisé pour le transport d'une charge utile formée par une source d'énergie, en particulier pour le transport d'une source d'énergie à partir de laquelle au moins des parties du gaz porteur nécessaire pour le fonctionnement du système d'aéronef et/ou des parties de l'énergie nécessaire pour le fonctionnement du système d'aéronef peuvent être obtenues.
